# EUROPEAN PATENT APPLICATION

(11) **EP 3 624 367 A1**
(43) Date of publication of application: **18.03.2020**
(21) Application number: 19206847.6
(22) Date of filing: 21.01.2014
(51) Int. Cl.: H04J 11/00, H04W 28/04, H04W 72/04, H04B 15/00, H04L 1/12, H04L 5/00, H04L 27/26, H04L 1/16, H04L 1/18, H04L 1/00, H04W 88/02, H04W 88/08

(54) **USER TERMINAL, RADIO BASE STATION, AND RADIO COMMUNICATION METHOD**

(30) Priority: 31.01.2013 JP 2013017348
(62) Divisional of application: 14745498.7
(71) Applicant: NTT DOCOMO, INC., Chiyoda-ku Tokyo 100-6150 (JP)
(72) Inventor: Kishiyama, Yoshihisa, Tokyo, 100-6150 (JP); Benjebbour, Anass, Tokyo, 100-6150 (JP); Saitou, Yuuya, Tokyo, 100-6150 (JP)
(74) Representative: Hoffmann Eitle

(57) **Abstract**

The present invention is designed to provide a user terminal, a radio base station and a radio communication method of novel structures that can achieve a good communication environment. A radio base station non-orthogonal-multiplexes downlink signals for a plurality of user terminals over a given radio resource, a user terminal having received the downlink signals for the plurality of user terminals decodes downlink signal for another user terminal, judges whether or not the downlink signal for the other user terminal has been successfully received, based on the decoding result of the downlink signal, reports a judgement result as to whether or not the downlink signal for the other user terminal has been successfully received and a judgement result as to whether or not a downlink signal for the user terminal has been successfully received, to the radio base station, and then the radio base station executes retransmission control of downlink signals based on reports from the user terminal.

## Description

### Technical Field

The present invention relates to a user terminal, a radio base station and a radio communication method.

### Background Art

The specifications of long-term evolution (LTE) have been developed for the purpose of achieving increased speed, lower delay and so on in UMTS (Universal Mobile Telecommunications System) (non-patent literature 1). In LTE, a communication scheme that is based on OFDMA (Orthogonal Frequency Division Multiple Access) is used in downlink channels (downlink), and a communication scheme that is based on SC-FDMA (Single Carrier Frequency Division Multiple Access) is used in uplink channels (uplink).

### Citation List

### Non-Patent Literature

Non-Patent Literature 1: 3GPP TR 25.913 "Requirements for Evolved UTRA and Evolved UTRAN"

### Summary of Invention

### Technical Problem

Now, in future radio communication systems referred to as, for example, "FRA (Future Radio Access)," communication schemes to make applied use of non-orthogonal multiple access (NOMA), which is premised upon canceling interference on the receiving side, are anticipated to be employed. In NOMA, information data sequences for a plurality of user terminals of varying channel gains are superposed on the same radio resource (frequency band, time slot, etc.) on the downlink. Each information data sequence is transmitted with different transmission power in accordance with the condition of the transmission path, so that each user terminal can cancel signals for other user terminals, for example, by SIC (Successive Interference Cancellation), and adequately acquire information for the subject terminal.

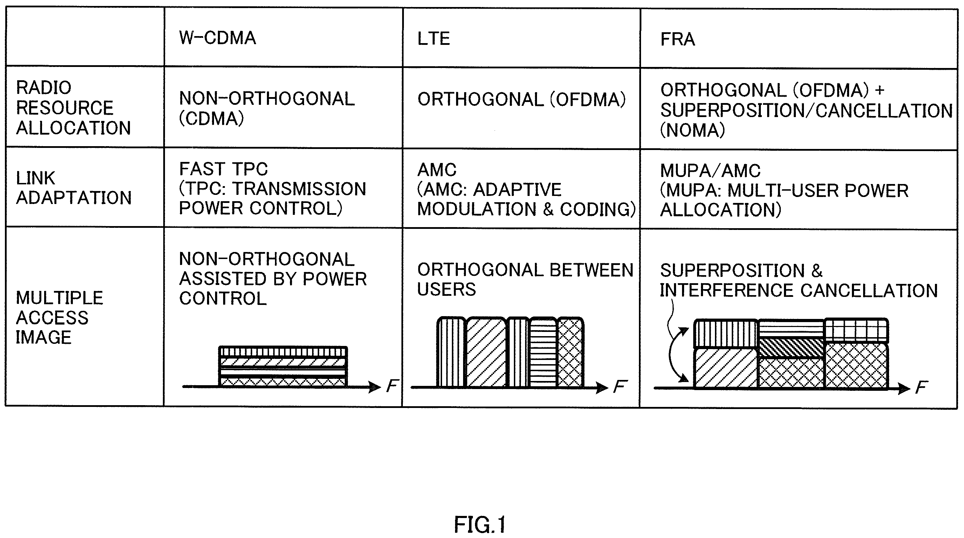

As noted above, in NOMA, a plurality of information data sequences are superposed on the same radio resource. Consequently, as shown in FIG. 1, it may be possible to increase the efficiency of the use of radio resources by superposing a plurality of information data sequences on radio resources allocated in OFDMA. However, conventional radio communication systems are not anticipated to combine NOMA with OFDMA, and cannot achieve a good communication environment as they are.

The present invention has been made in view of the above, and it is therefore an object of the present invention to provide a user terminal, a radio base station and a radio communication method of novel structures that can achieve a good communication environment.

### Solution to Problem

A user terminal of the present invention has a first decoding section that decodes a downlink signal for another user terminal from downlink signals for a plurality of user terminals that are non-orthogonal-multiplexed over a given radio resource, a first judgement section that judges whether or not the downlink signal for the other user terminal has been successfully received, based on a decoding result in the first decoding section, an interference cancellation section that cancels the decoded downlink signal for the other user terminal from the downlink signals for the plurality of user terminals, a second decoding section that decodes a downlink signal for the user terminal, from the downlink signals for the plurality of user terminals, from which the downlink signal for the other user terminal has been canceled in the interference cancellation section, and a second judgement section that judges whether or not the downlink signal for the user terminal has been successfully received, based on a decoding result in the second decoding section.

### Advantageous Effects of Invention

According to the present invention, it is possible to provide a user terminal, a radio base station and a radio communication method of novel structures that can achieve a good communication environment.

### Brief Description of Drawings

FIG. 1 is a schematic diagram to show a radio access scheme to be used in a radio communication system;
FIG. 2 is a schematic diagram to show an example basic structure of a radio communication system where NOMA is employed on the downlink;
FIG. 3 is a schematic diagram to explain downlink NOMA;
FIG. 4 is a schematic diagram to explain downlink NOMA/MIMO;
FIG. 5 provides schematic diagrams to show example radio resource structures of demodulation reference signals that are transmitted from a radio base station;
FIG. 6 is a flow chart to explain a communication sequence of a radio communication method according to the present embodiment;
FIG. 7 provides tables to explain ACK/NACK signal formats;
FIG. 8 is a schematic diagram to show an example structure of a radio communication system;
FIG. 9 is a block diagram to show an example structure of a radio base station;
FIG. 10 is a block diagram to show an example structure of a user terminal; and
FIG. 11 is a block diagram to show example structures of baseband signal processing sections provided in a radio base station and a user terminal.

### Description of Embodiments

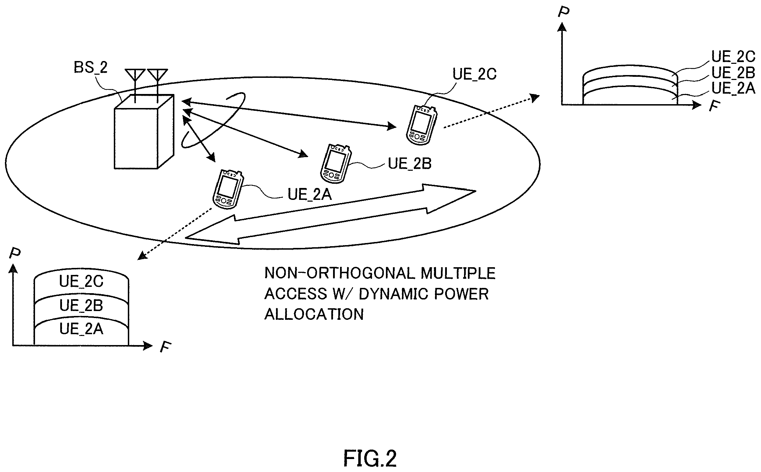

FIG. 2 is a schematic diagram to show an example basic structure of a radio communication system where NOMA (Non-Orthogonal Multiple Access) is applied to the downlink. FIG. 2 shows an example in which a cell is formed by a radio base station BS (here, radio base station BS_2). In the coverage area of radio base station BS_2, a plurality of user terminals UE (here, user terminals UE_2A, UE_2B and UE_2C) are present. In this radio communication system, radio base station BS_2 can non-orthogonal-multiplex downlink signals for a plurality of user terminals UE over the same radio resources (frequency band, time slot, etc.) and transmit with different transmission power.

In the radio communication system shown in FIG. 2, transmission power is controlled in accordance with the condition of the transmission path of each user terminal UE (for example, the channel gain, the received SINR, and the path loss (propagation loss and route loss) between the radio base station BS and the user terminal UE). For example, control is executed so that low transmission power is allocated to user terminal UE_2A where the condition of the transmission path is good (the channel gain is high, the received SINR is high and the path loss is low), and high transmission power is allocated to user terminal UE_2C where the condition of the transmission path is poor (the channel gain is low, the received SINR is low and the path loss is great). Note that the condition of the transmission path for user terminal UE_2B falls somewhere in between user terminal UE_2A and user terminal UE_2C.

By this transmission power control, for example, the signals for user terminals UE_2A and UE_2B become sufficiently weak in the location where user terminal UE_2C is present. Consequently, user terminal UE_2C can decode the signal for the subject terminal ignoring interference from the signals for user terminals UE_2A and UE_2B. Meanwhile, the signals for user terminals UE_2B and UE_2C are strong in the location where user terminal UE_2A is present. Consequently, user terminal UE_2A receives the signals for user terminals UE_2B and UE_2C in addition to the signal for the subject terminal.

In NOMA, signals for user terminals UE are multiplexed in an identifiable manner, and for example, user terminal UE_2A can decode and cancel the signals for user terminals UE_2B and UE_2C. By such SIC (Successive Interference Cancellation) reception, each user terminal UE adequately separates and acquires signals for the subject terminal.

As shown in FIG. 2, in downlink NOMA, signals for a plurality of user terminals UE can be superposed over the same radio resource, so that the efficiency of the use of radio resources is improved. Meanwhile, in order to handle the prospective increase of traffic in future radio communication systems, a study is being conducted on applying NOMA to MIMO (Multiple-Input Multiple-Output) (hereinafter referred to as "NOMA/MIMO").

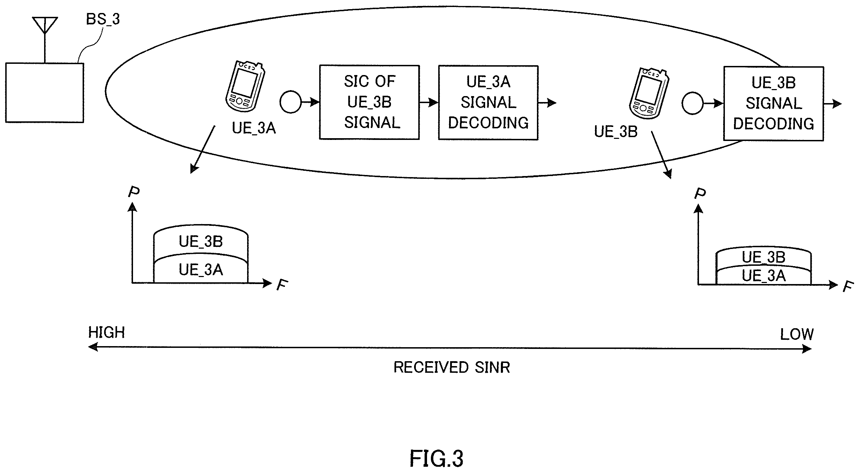

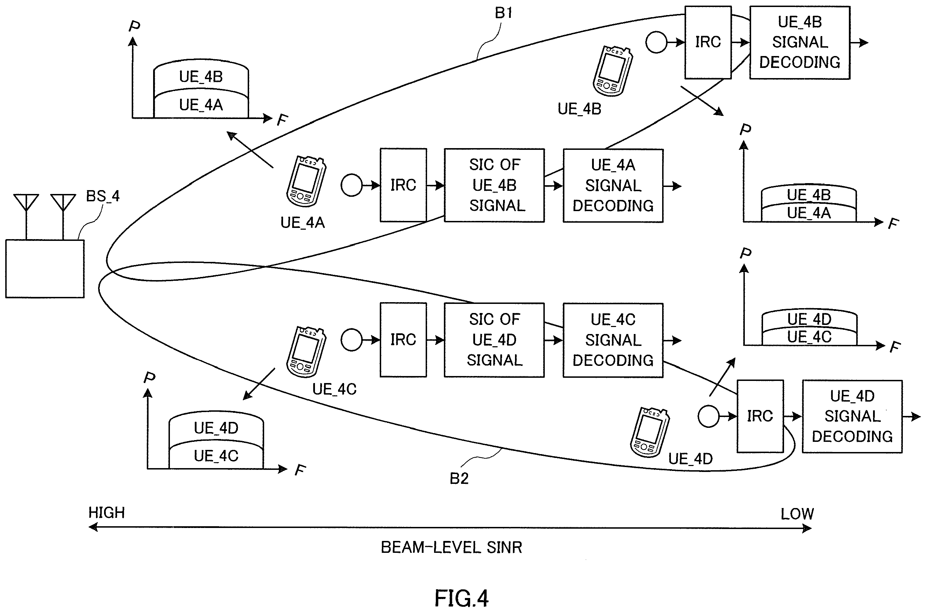

FIG. 3 is a schematic diagram to explain downlink NOMA, and FIG. 4 is a schematic diagram to explain downlink NOMA/MIMO. As shown in FIG. 3, in normal NOMA, the downlink signal for user terminal UE_3B where the condition of the transmission path is poorer than at user terminal UE_3A is transmitted with higher transmission power than the downlink signal for user terminal UE_3A. Although user terminal UE_3A receives the downlink signal for user terminal UE_3B as an interference signal, this interference signal can be canceled by means of SIC. Meanwhile, the downlink signal for user terminal UE_3A where the condition of the transmission path is better than at user terminal UE_3B is transmitted with lower transmission power than the downlink signal for user terminal UE_3B. Consequently, user terminal UE_3B can ignore the interference by the downlink signal for user terminal UE_3A.

Meanwhile, in NOMA/MIMO, as shown in FIG. 4, for example, downlink signals for a plurality of user terminals UE (here, user terminals UE_4A, UE_4B, UE_4C and UE_4D) are non-orthogonal-multiplexed in each of a plurality of transmission beams (here, transmission beams B1 and B2) that are formed in different locations. To be more specific, in FIG. 4, downlink signals for user terminals UE_4A and UE_4B are non-orthogonal-multiplexed in transmission beam B1, and downlink signals for user terminals UE_4C and UE_4D are non-orthogonal-multiplexed in transmission beam B2.

In NOMA/MIMO, interference between transmission beams is suppressed by, for example, IRC (Interference Rejection Combining). The receiving process in each user terminal UE is the same as in NOMA of FIG. 3, except for interference suppression between transmission beams. In this way, by applying NOMA/MIMO to the downlink, a plurality of transmission beams of varying locations can use the same radio resources (space division multiplexing), so that it is possible to further increase the efficiency of the use of radio resources. Note that, although FIG. 4 shows an example of applying NOMA to MU-MIMO (Multiple User Multiple-Input Multiple-Output), MIMO is by no means limited to this.

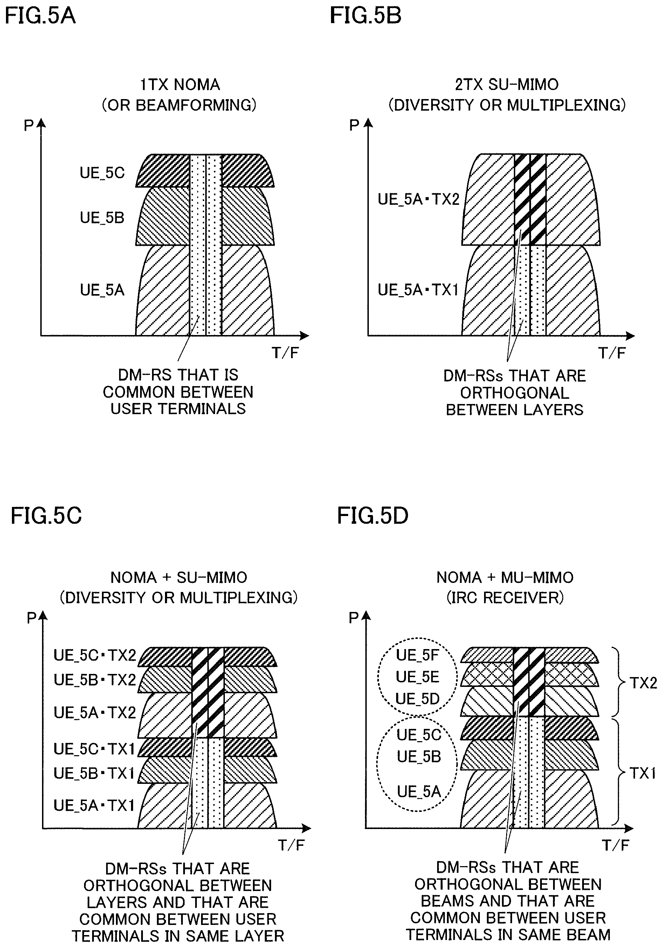

Next, reference signals used in NOMA will be explained. FIG. 5 provides schematic diagrams to show example radio resource structures of demodulation reference signals (DM-RSs) that are transmitted from a radio base station BS. In FIG. 5A to FIG. 5D, the horizontal axis is radio resources (time and frequency), and the vertical axis is transmission power. As shown in FIG. 5A, when NOMA is applied to transmission beams by one antenna, signals for each user terminal UE (here, user terminal UE_5A, UE_5B or UE_5C) are transmitted using the same radio resources, with different power. In this case, a DM-RS that is common among the user terminals UE can be used as a reference signal for demodulation.

Also, as shown in FIG. 5B, in SU-MIMO (Single-User Multiple-Input Multiple-Output) to use transmission beams by a plurality of transmitting antennas (here, antennas TX1 and TX2), a plurality of (two) information data sequences (layers) for a user terminal UE (here, user terminal UE_5A) are multiplexed over the same radio resources. In this case, for example, DM-RSs that are orthogonal between the layers can be used as reference signals for demodulation.

Meanwhile, as shown in FIG. 5C, when NOMA is applied to SU-MIMO where transmission beams by a plurality of transmitting antennas (here, antennas TX1 and TX2) are used, a plurality of (two) information data sequences (layers) for each user terminal UE (here, user terminal UE_5A, UE_5B or UE_5C) are multiplexed over the same radio resources. Here, signals for the user terminals UE are transmitted with different power. In this case, for example, DM-RSs that are common between the user terminals UE in the same layer and that are orthogonal between the layers can be used as reference signals for demodulation.

Furthermore, as shown in FIG. 5D, when NOMA is applied to MU-MIMO where transmission beams by a plurality of transmitting antennas (here, transmitting antennas TX1 and TX2) are used, signals for user terminals UE (here, user terminals UE_5A, UE_5B, UE_5C, UE_5D, UE_5E and UE_5F) are multiplexed over the same radio resources. In the same transmission beam, signals for the user terminals UE are transmitted with different power. In this case, for example, DM-RSs that are common between the user terminals UE in the same transmission beam and that are orthogonal between the transmission beams can be used as reference signals for demodulation. When a common DM-RS structure is employed between user terminals UE in this way, the transmission power ratio for each user terminal UE is reported. Note that, although cases have been shown here where common DM-RS structures are employed between user terminals UE, it is equally possible to employ structures to transmit dedicated DM-RSs on a per user terminal basis.

Now, HARQ (Hybrid Automatic Repeat reQuest), which is an enhancement of ARQ (Automatic Repeat reQuest), is employed for retransmission control in a LTE system and so on. For example, in downlink retransmission control, each user terminal UE feeds back ACKs (ACKnowledgements)/NACKs (Negative ACKnowledgements) in accordance with the receiving results of downlink signals. ACKs/NACKs are reported to a radio base station BS by means of the PUCCH (Physical Uplink Control CHannel), the PUSCH (Physical Uplink Shared CHannel) and so on. To be more specific, a user terminal UE reports an ACK to the radio base station BS when the user terminal UE has succeeded in adequately decoding a downlink signal, and reports a NACK to the radio base station BS when the user terminal UE has failed to adequately decode a downlink signal. The radio base station BS executes downlink retransmission control in accordance with ACKs/NACKs reported, so that each user terminal UE can acquire the packet needed. When each user terminal UE receives a retransmission packet, the user terminal UE combines the retransmission packet with the packet transmitted first and restores the data.

In this way, in a LTE system and so on, the radio base station BS executes downlink retransmission control in accordance with ACKs/NACKs that user terminals UE feed back based on the receiving results of downlink signals for the subject terminals. In contrast, in a radio communication system that employs NOMA on the downlink, each user terminal UE needs to cancel signals for other user terminals when the user terminal UE decodes a signal for the subject terminal. That is to say, the receiving result of each user terminal UE also depends on the receiving results of the downlink signals for other user terminals, and therefore retransmission control that is suitable for NOMA cannot be always achieved by conventional feedback methods that report only the receiving result of the downlink signal for the subject terminal.

Given this problem, the present inventors have thought that, if it is possible to report information that indicates the decoding results of signals for other user terminals, which are canceled in each user terminal UE, to a radio base station BS, it may be possible to achieve adequate retransmission control in a radio communication system that employs NOMA on the downlink. Then, the present invention has been completed based on this idea. That is, the main point of the present invention is that each user terminal UE reports newly defined ACKs/NACKs (also referred to as "TENT. ACKs/NACKs (Tentative ACKs/NACKs)") to a radio base station BS in accordance with the decoding results of signals for other user terminals that are canceled when each user terminal UE decodes the signal for the subject terminal. Now, the radio communication method according to the present embodiment will be described below in detail.

### (Radio Communication Method)

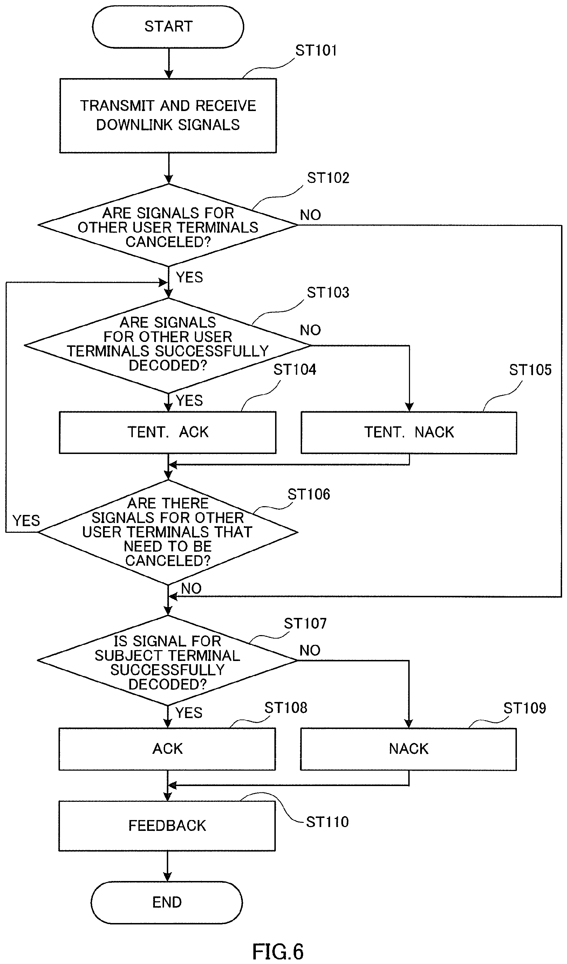

FIG. 6 is a flow chart to explain a communication sequence of the radio communication method according to the present embodiment. First, a radio base station BS transmits downlink signals to user terminals UE by non-orthogonal-multiplexing (step ST101). When a user terminal UE receives a downlink signal, the user terminal UE judges whether or not it is necessary to cancel signals for other user terminals, based on control information and so on reported from the radio base station BS (step ST102).

To be more specific, for example, the user terminal UE judges that signals for user terminals UE where the condition of the transmission path is poorer than at the subject terminal (that is, signals which are non-orthogonal-multiplexed with higher transmission power) need to be canceled, and judges that signals for user terminals UE where the condition of the transmission path is better than at the subject terminal (that is, signals which are non-orthogonal-multiplexed with lower transmission power) do not need to be canceled. When the user terminal UE judges that signals for other user terminals need to be canceled (step ST102: YES), the user terminal UE decodes the signals for other terminals which need to be canceled, and judges whether the signals for other user terminals are successfully decoded (step ST103).

When the signals for other user terminals are successfully decoded (step ST103: YES), the user terminals UE judges that the signals for other user terminals have been successfully received, and memorizes ACKs (TENT. ACKs) (step ST104). On the other hand, when the signals for other user terminals are not successfully decoded (step ST103: NO), the user terminal UE judges that the signals for other use terminals have failed to be received, and memorizes NACKs (TENT. NACKs) (step ST105).

When there are more signals for other user terminals which need to be canceled (step ST106: YES), the user terminal UE executes the same judgements for the signals for other user terminals. That is, the user terminal UE decodes the signals for other user terminals and judges whether the signals for other user terminals have been successfully decoded (step ST103). When there are no more signals for other user terminals which need to be canceled (step ST106: NO), the user terminal UE decodes the signal for the subject terminal and judges whether the signal for the subject terminal has been successfully decoded (step ST107). The user terminal UE decodes the signal for the subject terminal and judges whether the signal for the subject terminal has been successfully decoded (step ST107) when the user terminal UE judges that there are no signals for other user terminals that need to be canceled (step ST102: NO) in step ST102 as well.

When the signal for the subject terminal has been successfully decoded (step ST107: YES), the user terminal judges that the signal for the subject terminal has been successfully received, and memorizes an ACK (step ST108). On the other hand, when the signal for the subject terminal has not been successfully decoded (step ST107: NO), the user terminal judges that the signal for the subject terminal has failed to be received, and memorizes a NACK (step ST109). Then, the user terminal UE feeds back the ACKs/the NACKs (TENT. ACKs/NACKs) pertaining to each of the signals for other user terminals to the radio base station BS along with the ACK/the NACK pertaining to the signal for the subject terminal.

In this way, the user terminal UE reports ACKs/NACKs (TENT. ACKs/NACKs) to the radio base station BS in accordance with the decoding results of the signals for other user terminals, which are canceled, so that the radio base station BS can identify in which step decoding errors occur. As a result, as described later, it becomes possible to select retransmission control suitable for the receiving environment, and increase the retransmission success rate.

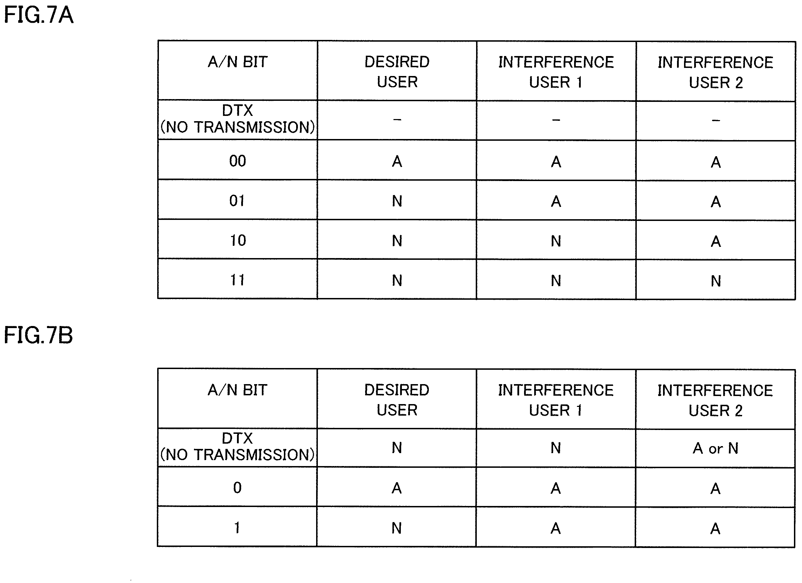

Next, the signal formats of ACKs/NACKs (including TENT. ACKs/NACKs) used in the radio communication method according to the present embodiment will be explained. FIG. 7 provides tables to explain ACK/NACK signal formats. FIG. 7 shows examples of ACK/NACK signal formats that are used when signals for three user terminals UE (a subject terminal (DESIRED USER), terminal 1 (INTERFERENCE USER 1) and terminal 2 (INTERFERENCE USER 2)) are non-orthogonal-multiplexed. A case is assumed here where the condition of the transmission path is the best at the subject terminal and the worst at terminal 2. That is, the subject terminal decodes and cancels the signal for terminal 2, then decodes and cancels the signal for terminal 1, and then can decode the signal for the subject terminal. In FIG. 7, "A" stands for an ACK, and "N" stands for a NACK.

Note that, ACKs/NACKs are transmitted by means of the PUCCH or the PUSCH, for example. In the case where ACKs/NACKs are transmitted by means of the PUCCH, for example, format 1a, format 1b or format 3 can be used. When a large number of bits are reported, it is equally possible to apply channel selection. For example, by applying channel selection to format 1b or format 3 of the PUCCH, it is possible to increase the number of bits that can be reported.

FIG. 7A shows a first example structure of an ACK/NACK signal format. In the first example structure, when the signals for terminal 2, terminal 1 and the subject terminal are successfully decoded, the A/N bits are "00." When the signals for terminal 2 and terminal 1 are successfully decoded and the signal for the subject terminal is not successfully decoded, the A/N bits are "01." When the signal for terminal 2 is successfully decoded and the signals for terminal 1 and the subject terminal are not successfully decoded, the A/N bits are "10." When the signals for terminal 2, terminal 1 and the subject terminal are not successfully decoded, the A/N bits are "11."

Generally, in NOMA, when signals for user terminals where the condition of the transmission path is poor (that is, signals that are non-orthogonal-multiplexed with high transmission power) cannot be decoded, the signals cannot be even canceled, and therefore other signals where the condition of the transmission path is good cannot be decoded either. For example, when the receiving result of the signal for terminal 2 is a NACK, neither of the receiving results of the signals for terminal 1 and the subject terminal will not be an ACK, and, when the receiving result of the signal for terminal 1 is a NACK, the receiving result of the signal for the subject terminal will not be an ACK. Consequently, such cases can be removed from the ACK/NACK signal formats. As a result, it is possible to reduce the amount of communication involved in ACK/NACK feedback, as compared with the case of using a signal format that considers all combinations.

FIG. 7B shows a second example structure of an ACK/NACK signal format. In the second example structure, when the signals for terminal 2, terminal 1 and the subject terminal are successfully decoded, the A/N bit is "0." When the signals for terminal 2 and terminal 1 are successfully decoded and the signal for the subject terminal is not successfully decoded, the A/N bits are "1." On the other hand, when the signal for terminal 2 is successfully decoded and the signals for terminal 1 and the subject terminal are not successfully decoded, as well as when the signals for terminal 2, terminal 1 and the subject terminal are not successfully decoded, the A/N bit is DTX (no transmission). In this way, by not transmitting the A/N bits when signals for other user terminals are not adequately decoded, the amount of communication involved in ACK/NACK feedback can be further reduced.

Next, the retransmission control that a radio base station BS executes based on ACKs/NACKs and TENT. ACKs/NACKs will be explained. As stated above, in a radio communication system where NOMA is employed, downlink signals for user terminals UE are non-orthogonal-multiplexed over the same radio resources. Each user terminal UE having received downlink signals cancels signals for other user terminals and decodes the signal for the subject terminal, then feeds back ACKs/NACKs and TENT. ACKs/NACKs depending on the decoding results. In the present embodiment, in addition to the decoding result of the signal for the subject terminal, the decoding results of signals for other user terminals are also fed back, so that adequate retransmission control for the communication environment is made possible as shown below.

For example, upon retransmission, the radio base station BS can orthogonalize packets that have been transmitted non-orthogonally. By orthogonalizing retransmission packets, it becomes unnecessary for each user terminal UE to cancel packets for other user terminals by means of SIC. Consequently, it is possible to increase the retransmission success rate (that is, the rate that retransmission packets are adequately received). Obviously, it is equally possible to transmit retransmission packets non-orthogonally. When retransmission packets are transmitted non-orthogonally, the process related to changing the transmission scheme is unnecessary, so that the retransmission control can be prevented from complicating.

Furthermore, the radio base station BS can alter the non-orthogonal-multiplexing pattern upon retransmission. For example, assume the case shown in FIG. 3 where user terminal UE_3A is the subject terminal. In this case, since the condition of the transmission path at user terminal UE_3A is better than the condition of the transmission path at user terminal UE_3B, user terminal UE_3A needs to decode and cancel the signal for user terminal UE_3B. In this case, upon retransmission, for example, it is equally possible to switch the relationship between user terminal UE_3A and user terminal UE_3B and make user terminal UE_3B decode and cancel the signal for user terminal UE_3A. That is, it is possible to change the relationship between downlink signals for a plurality of user terminals that are non-orthogonal-multiplexed. In this case, user terminal UE_3A can ignore the signal for user terminal UE_3B and decode the signal for the subject terminal.

Also, the combination of user terminals UE to non-orthogonal-multiplex (the combination of signals for a plurality of user terminals UE that are non-orthogonal-multiplexed) can be changed. For example, it is equally possible to change the combination of the downlink signal for user terminal UE_3A and the downlink signal for user terminal UE_3B, to the combination of the downlink signal for user terminal UE_3A to be subject to retransmission and downlink signals for other user terminals UE.

Furthermore, it is equally possible for the radio base station BS to change the transmission power ratio in non-orthogonal-multiplexing upon retransmission. By changing the transmission power ratio in non-orthogonal-multiplexing, the retransmission success rate can be increased. Obviously, upon retransmission, the same transmission power ratio may also be used. In this case, the process related to changing the transmission power ratio becomes unnecessary, so that the retransmission control can be prevented from complicating.

Also, upon retransmission, it is equally possible to change the scrambling code, the interleaving pattern, the modulation method (the phase shift) and so on. The changeable conditions include, for example, the resource allocation, the modulation scheme, the MIMO rank, the redundancy version and so on. Note that these conditions may also be unchanged.

Downlink signals retransmitted in this way are received by a user terminal UE, and combined with the downlink signals transmitted first. That is, the user terminal UE stores the packet for the subject terminal, which is received first, in a HARQ buffer, and then combines the packet with the retransmission packet. By this retransmission control, the user terminal UE can acquire adequate data. The method of combining packets can be, for example, Chase composition, IR (Incremental Redundancy) composition and so on. Note that, when signals for other terminals are not successfully canceled, the acquired signals contain significant errors and are not suitable for packet composition. Consequently, in such a case, it is equally possible to discard the acquired signals without using for packet composition.

### (Example Structure of Radio Communication System)

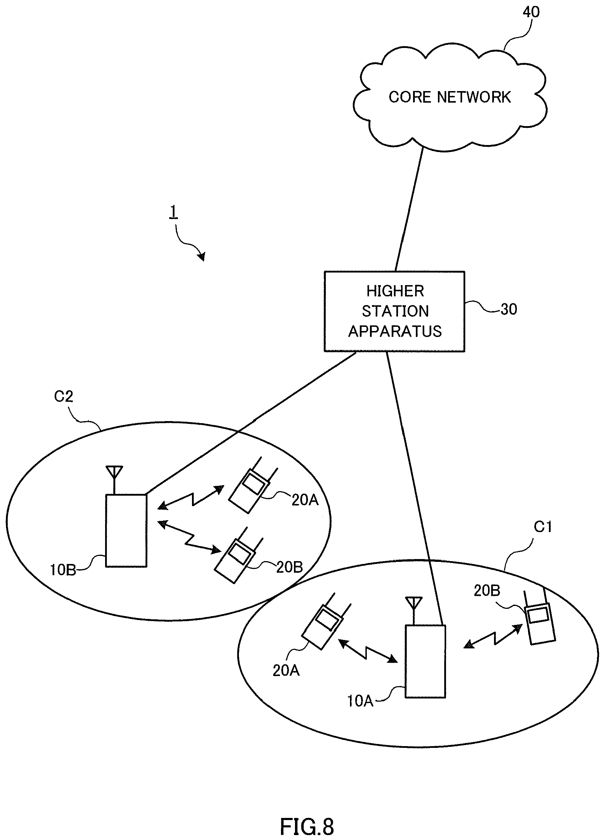

Now, the radio communication system according to the present embodiment will be described below in detail. FIG. 8 is a schematic diagram to show an example structure of the radio communication system according to the present embodiment. Note that the radio communication system shown in FIG. 8 is a system to accommodate, for example, a LTE system or a LTE-A (LTE-Advanced) system. This radio communication system may be referred to as "IMT-advanced," or may be referred to as "4G."

As shown in FIG. 8, a radio communication system 1 includes radio base stations 10 (10A and 10B), and a plurality of user terminals 20 (20A and 20B). The radio base stations 10 are connected with a higher station apparatus 30, and this higher station apparatus 30 is connected with a core network 40. Each user terminal 20 can communicate with the radio base stations 10 in cells C1 and C2. In this radio communication system 1, the user terminals 20 may be mobile terminals or may be fixed terminals. Note that the higher station apparatus 30 may be, for example, an access gateway apparatus, a radio network controller (RNC), a mobility management entity (MME) and so on, but is by no means limited to these.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier transmission scheme to perform communication by dividing a frequency band into a plurality of narrow frequency bands (subcarriers) and mapping data to each subcarrier. SC-FDMA is a single-carrier transmission scheme to reduce interference between terminals by dividing the system band into bands formed with one or continuous resource blocks, per terminal, and allowing a plurality of terminals to use mutually different bands. To the downlink of this radio communication system 1, NOMA is applied as necessary.

Here, communication channels to be used in the radio communication system 1 shown in FIG. 8 will be described. Downlink communication channels include the PDSCH (Physical Downlink Shared CHannel), which is used by each user terminal 20 on a shared basis, and downlink L1/L2 control channels (the PDCCH, the PCFICH, the PHICH and the enhanced PDCCH). User data and higher control information are transmitted by the PDSCH. Scheduling information for the PDSCH and the PUSCH and so on is transmitted by the PDCCH (Physical Downlink Control CHannel). The number of OFDM symbols to use for the PDCCH is transmitted by the PCFICH (Physical Control Format Indicator CHannel). HARQ ACKs and NACKs for the PUSCH are transmitted by the PHICH (Physical Hybrid-ARQ Indicator CHannel).

Uplink communication channels include the PUSCH (Physical Uplink Shared CHannel), which is used by each user terminal 20 on a shared basis as an uplink data channel, and the PUCCH (Physical Uplink Control CHannel), which is an uplink control channel. User data and higher control information are transmitted by this PUSCH. Also, by means of the PUCCH, downlink channel quality indicators (CQIs), ACKs/NACKs, TENT. ACKs/NACKs and so on are transmitted. Note that it is equally possible to transmit ACKs/NACKs and TENT. ACKs/NACKs by the PUSCH.

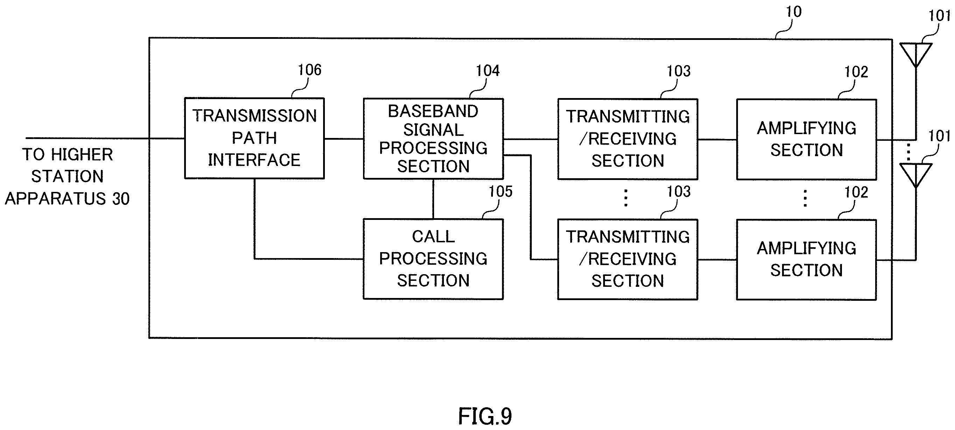

FIG. 9 is a block diagram to show an example structure of a radio base station according to the present embodiment. A radio base station 10 has a plurality of transmitting/receiving antennas 101 for beam forming, amplifying sections 102, transmitting/receiving sections 103, a baseband signal processing section 104, a call processing section 105 and a transmission path interface 106.

User data to be transmitted from the radio base station 10 to a user terminal 20 on the downlink is input from the higher station apparatus 30, into the baseband signal processing section 104, via the transmission path interface 106.

In the baseband signal processing section 104, user data that is input is subjected to a PDCP layer process, division and coupling of user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process and a precoding process, and then transferred to each transmitting/receiving section 103. Furthermore, downlink control information is subjected to transmission processes such as channel coding and an IFFT process, and transferred to each transmitting/receiving section 103.

Also, the baseband signal processing section 104 reports control information for communication in the serving cell to the user terminals 20 through a broadcast channel. The information for communication in the serving cell includes, for example, the uplink or downlink system bandwidth.

Each transmitting/receiving section 103 converts the baseband signals, which are pre-coded and output from the baseband signal processing section 104 on a per antenna basis, into a radio frequency band. The amplifying sections 102 amplify the radio frequency signals having been subjected to frequency conversion, and transmit the results through the transmitting/receiving antennas 101.

On the other hand, data to be transmitted from the user terminal 20 to the radio base station 10 on the uplink is received in each transmitting/receiving antenna 101 and input in the amplifying sections 102. Radio frequency signals that are input from each transmitting/receiving antenna 101 are amplified in the amplifying sections 102 and sent to each transmitting/receiving section 103. The amplified radio frequency signals are converted into baseband signals in each transmitting/receiving section 103, and input in the baseband signal processing section 104.

In the baseband signal processing section 104, user data that is included in the baseband signals that are input is subjected to an fast Fourier transform (FFT) process, an inverse discrete Fourier transform (IDFT) process, error correction decoding, a MAC retransmission control receiving process, and RLC layer and PDCP layer receiving processes, and transferred to the higher station apparatus 30 via the transmission path interface 106. The call processing section 105 performs call processing such as setting up and releasing communication channels, manages the state of the radio base station 10 and manages the radio resources.

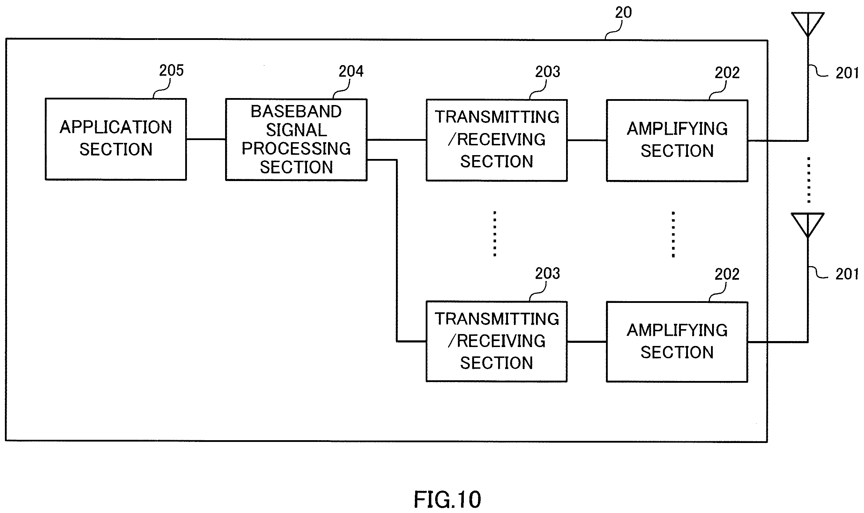

FIG. 10 is a block diagram to show an example structure of a user terminal according to the present embodiment. A user terminal 20 has a plurality of transmitting/receiving antennas 201, amplifying sections 202, transmitting/receiving sections 203, a baseband signal processing section 204 and an application section 205.

Downlink data is received in a plurality of transmitting/receiving antennas 201 and input in the amplifying sections 202. The radio frequency signals input from each transmitting/receiving antenna 201 are amplified in the amplifying sections 202 and sent to each transmitting/receiving section 203. The amplified radio frequency signals are converted into baseband signals in each transmitting/receiving section 203, and input in the baseband signal processing section 204. In the baseband signal processing section 204, the baseband signals that are input are subjected to an FFT process, error correction decoding, a retransmission control receiving process and so on. User data that is included in the downlink data is transferred to the application section 205. The application section 205 performs processes related to higher layers above the physical layer and the MAC layer. Also, the broadcast information that is included in the downlink data is also transferred to the application section 205.

Meanwhile, uplink user data is input from the application section 205 to the baseband signal processing section 204. In the baseband signal processing section 204, the user data that is input is subjected to a retransmission control transmission process, channel coding, precoding, a discrete Fourier transform (DFT) process, an IFFT process and so on, and then transferred to each transmitting/receiving section 203. Baseband signals that are output from the baseband signal processing section 204 are converted into a radio frequency band in the transmitting/receiving sections 203. After that, the radio frequency signals having been subjected to frequency conversion are amplified in the amplifying sections 202 and transmitted from the transmitting/receiving antennas 201.

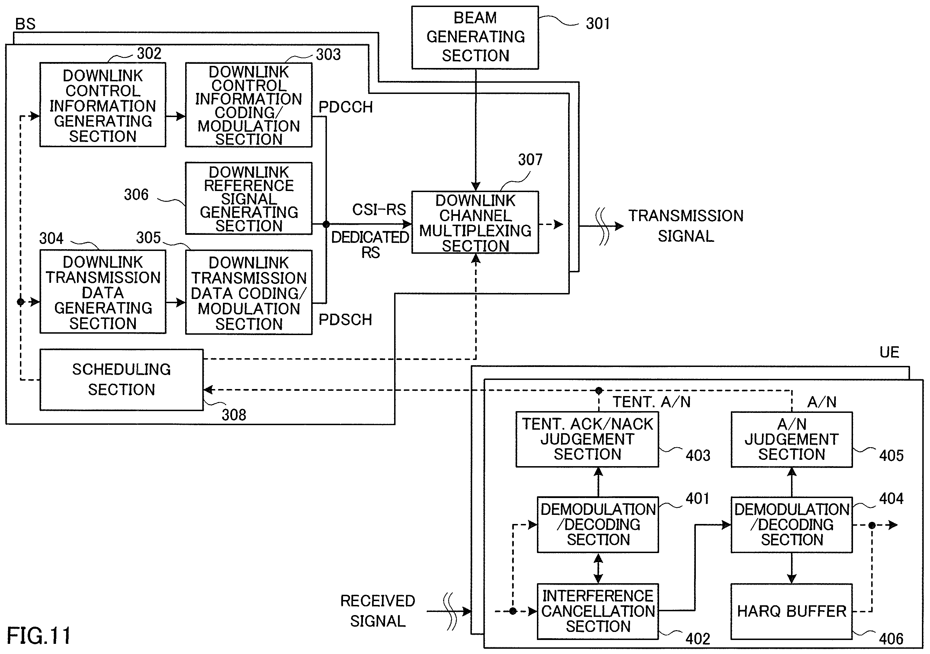

FIG. 11 is a block diagram to show example structures of the baseband signal processing sections provided in the radio base stations and user terminals according to the present embodiment. Note that, although FIG. 11 shows only part of the structures, the radio base station 10 and the user terminal 20 have components that are required, without shortage.

As shown in FIG. 11, the radio base station 10 has a beam generating section 301, a downlink control information generating section 302, a downlink control information coding/modulation section 303, a downlink transmission data generating section 304, a downlink transmission data coding/modulation section 305, a downlink reference signal generating section 306, a downlink channel multiplexing section 307 and a scheduling section 308.

The beam generating section 301 generates a plurality of transmission beams that use given radio resources (frequency band and time slot). In each transmission beam that is generated in the beam generating section 301, downlink signals for a plurality of use terminals 20 are non-orthogonal-multiplexed in accordance with commands from the scheduling section 308, which will be described later.

The downlink control information generating section 302 generates user terminal-specific (UE-specific) downlink control information (DCI) to be transmitted in the PDCCH. The user terminal-specific downlink control information includes DL assignments, which are PDSCH allocation information, UL grants, which are PUSCH allocation information, and so on. Also, this downlink control information includes all sorts of information that is required for receiving processes of signals which are non-orthogonal-multiplexed.

The downlink control information that is generated in the downlink control information generating section 302 is input in the downlink control information coding/modulation section 303, with shared control information that is common between the user terminals 20, as downlink control information to be transmitted in the PDCCH. The downlink control information coding/modulation section 303 performs channel coding and modulation of the downlink control information that is input. The modulated downlink control information is output to the downlink channel multiplexing section 307.

The downlink transmission data generating section 304 generates downlink user data on a per user terminal 20 basis. The downlink user data that is generated in the downlink transmission data generating section 304 is input in the downlink transmission data coding/modulation section 305, with higher control information, as downlink transmission data to be transmitted in the PDSCH. The downlink transmission data coding/modulation section 305 performs channel coding and modulation of the downlink transmission data for each user terminal 20. The modulated downlink transmission data is output to the downlink channel multiplexing section 307.

The downlink reference signal generating section 306 generates downlink reference signals (the CRS (Cell-specific Reference Signal), the CSI-RS (Channel State Information Reference Signal), the DM-RS and so on). The generated downlink reference signals are output to the downlink channel multiplexing section 307.

The downlink channel multiplexing section 307 combines the downlink control information, the downlink reference signals and the downlink transmission data (including higher control information) and generates downlink signals. To be more specific, the downlink channel multiplexing section 307 non-orthogonal-multiplexes downlink signals for a plurality of user terminals 20 that are selected, in accordance with scheduling information reported from the scheduling section 308. The downlink signals generated in the downlink channel multiplexing section 307 undergo an inverse fast Fourier transform process, a precoding process and so on, and are transferred to the transmitting/receiving sections 103.

The scheduling section 308 generates scheduling information for commanding allocation of radio resources, based on command information from the higher station apparatus 30 and channel state information (CSI) and so on that are fed back from each user terminal 20. Also, the scheduling section 308 executes HARQ retransmission control based on ACKs/NACKs and TENT. ACKs/NACKs that are reported from each user terminal 20.

For example, upon retransmission, the scheduling section 308 orthogonalizes packets that have been transmitted non-orthogonally. That is, scheduling is executed so that downlink signals for a plurality of user terminals including retransmission downlink signals are made orthogonal to each other. In this case, the quality of communication is improved by the orthogonalization, so that the retransmission success rate (that is, the rate that retransmission packets are adequately received) can be improved. Note that it is equally possible to transmit retransmission packets non-orthogonally.

Also, the scheduling section 308 can change the multiplexing pattern upon retransmission. For example, it is equally possible for the scheduling section 308 to change the relationships between a plurality of user terminals 20 that are non-orthogonal-multiplexed. In this case, for example, it is possible to increase the retransmission success rate by executing scheduling upon retransmission so that cancellation of signals for other user terminals is unnecessary. It is equally possible for the scheduling section 308 to change the combination of user terminals 20 to be non-orthogonal-multiplexed.

That is the scheduling section 308 changes the transmission power ratio of downlink signals for a plurality of user terminals that are non-orthogonal-multiplexed. In this case, for example, it is possible to increase the retransmission success rate by increasing the transmission power ratio of a downlink signal for a user terminal 20 that has fed back a NACK. Note that, upon retransmission, the same transmission power ratio may also be used.

Also, upon retransmission, it is equally possible for the scheduling section 308 to change the scrambling code, the interleave pattern, the modulation method (the phase shift) and so on that are used in non-orthogonal-multiplexing upon the first transmission. Furthermore, other changeable conditions may also be changed upon retransmission. The changeable conditions include, for example, the resource allocation, the modulation schemes, the number of MIMO rank, the redundancy versions and so on. By changing the above conditions upon retransmission, the retransmission success rate can be increased. Note that these conditions may also be unchanged.

As shown in FIG. 11, a user terminal 20 has a demodulation/decoding section (first decoding section) 401, an interference cancellation section 402, a TENT. A/N judgement section (first judgement section) 403, a demodulation/decoding section (second decoding section) 404, an A/N judgement section (second judgement section) 405 and a HARQ buffer 406.

Downlink signals for a plurality of user terminals 20 that are sent out non-orthogonally from the radio base station 10 are received in the transmitting/receiving antennas 201 of each user terminal 20, undergo removal of the cyclic prefixes, a fast Fourier transform process and so on, and then are transferred to the baseband signal processing section 204. In the baseband signal processing section 204, the non-orthogonal-multiplexed downlink signals are input to the demodulation/decoding section 401 and the interference cancellation section 402. Note that interference between the transmission beams is canceled by means of linear filtering such as IRC.

The demodulation/decoding section 401 demodulates and decodes downlink signals for other user terminals, from the downlink signals for a plurality of user terminals 20, which have been received, based on reports from the radio base station 10. To each user terminal 20, information related to the downlink signals for other user terminals, which are sent out non-orthogonally, is reported along with the downlink signal for the subject terminal. Based on this information, each user terminal 20 determines the downlink signals for other user terminals whose interference needs to be canceled, and demodulates and decodes the downlink signals for other user terminals in the demodulation/decoding section 401. The signals that are demodulated and decoded are transferred to the interference cancellation section 402 and the TENT. A/N judgement section 403. Note that, when there are no signals for other user terminals whose interference needs to be canceled in the downlink signals, which have been sent out non-orthogonally, such as when transmission power of the downlink signal for the subject terminal is the largest, downlink signals for a plurality of user terminals 20 are transferred to the demodulation/decoding section 404 through the interference cancellation section 402 without interference cancellation.

From the downlink signals for a plurality of user terminals 20 that have been sent out non-orthogonally, the interference cancellation section 402 removes the downlink signals for other user terminals, which have been demodulated and decoded in the demodulation/decoding section 401, as interference. In this way, it is possible to acquire signals from which the downlink signals for other user terminals have been removed. When there are no other downlink signals for other user terminals that require interference cancellation in the signals that have been acquired in the interference cancellation section 402, the interference cancellation section 402 transfers the acquired signals to the demodulation/decoding section 404.

Meanwhile, when there are other downlink signals for other user terminals that require interference cancellation in the signals that have been acquired in the interference cancellation section 402, the interference cancellation section 402 transfers the acquired signals to the demodulation/decoding section 401. The demodulation/decoding section 401 demodulates and decodes the downlink signals for other user terminals to be subject to cancellation, and then transfers to the interference cancellation section 402 and the TENT. A/N judgement section 403. The interference cancellation section 402 removes more downlink signals that have been demodulated and decoded, which are subject to cancellation, as interference. By repeating this operation, it is possible to remove all the downlink signals for other user terminals that require interference cancellation. The interference cancellation section 402 transfers signals that are acquired to the demodulation/decoding section 404 after all the downlink signals for other user terminals that require interference cancellation have been removed.

The TENT. A/N judgement section 403 judges whether downlink signals for other user terminals have been adequately demodulated and decoded. When the downlink signals for other user terminals are successfully demodulated and decoded, the TENT. A/N judgement section 403 judges that the signals for other terminals have been received successfully, and the user terminal 20 memorizes TENT. ACKs. On the other hand, when the signals for other user terminals are not successfully demodulated and decoded, the TENT. A/N judgement section 403 judges that the signals for other user terminals have failed to be received, and the user terminal 20 memorizes TENT. NACKs. The TENT. A/N judgement section 403 executes the same judgement for all the downlink signals for other user terminals that are transferred from the demodulation/decoding section 401. The judgement results are reported along with judgement results of the A/N judgement section 405, which will be explained later, to radio base station 10.

Note that the judgement results of the TENT. A/N judgement section 403 and the A/N judgement section 405 are transmitted to the radio base station 10, for example, by the PUCCH, the PUSCH and so on. When the judgement results are transmitted by means of the PUCCH, for example, format 1a, format 1b, format 3 and so on can be used. When a large number of bits are reported, it is equally possible to apply channel selection. For example, by applying channel selection to format 1b or format 3 of the PUCCH, it is possible to increase the number of bits that can be reported.

The demodulation/decoding section 404 demodulates and decodes the downlink signal for the subject terminal based on the signals that are transferred from the interference cancellation section 402 after interference has been canceled. The signal that has been demodulated and decoded is transferred to the A/N judgement section 405 and the HARQ buffer 406.

The A/N judgement section 405 judges whether the downlink signal for the subject terminal has been adequately demodulated and decoded. When the signal for the subject terminal has been successfully demodulated and decoded, the A/N judgement section 405 judges that the signal for the subject terminal has been successfully received, and the user terminal 20 memorizes an ACK. On the other hand, when the signal for the subject terminal has not been successfully demodulated and decoded, the A/N judgement section 405 judges that the signal for the subject terminal has failed to be received, and the user terminal 20 memorizes a NACK. The judgement result of the A/N judgement section 405 is reported to the radio base station 10.

When the A/N judgement section 405 judges that reception has succeeded, the signal that has been demodulated and decoded is provided to various processing as a downlink signal for the subject terminal. On the other hand, when A/N judgement section 405 judges that reception has failed, the signal that has been demodulated and decoded is stored in the HARQ buffer 406. The signal stored in the HARQ buffer 406 is combined with the signal that is retransmitted from the radio base station 10, and an adequate signal is restored. The restored signal is provided to various processing as a downlink signal for the subject terminal.

As the method of combining the signal that is stored in the HARQ buffer 406 and the signal that is received upon retransmission, for example, Chase composition, IR (Incremental Redundancy) composition, and so on can be used. Note that when signals for other user terminal are not successfully canceled, the acquired signals contain significant errors and are not suitable for composition. Consequently, in such a case, it is equally possible to discard the acquired signals without storing in the HARQ buffer 406.

As described above, with the radio communication system 1 according to the present embodiment, a user terminal 20 reports ACKs/NACKs (TENT. ACKs/NACKs) to a radio base station 10 in accordance with the decoding results of signals for other user terminals to be subject to cancellation, so that the radio base station 10 can identify in which step decoding errors occur. As a result, it becomes possible to select retransmission control suitable for the receiving environment and increase the retransmission success rate. In this way, a good communication environment can be achieved.

The present invention can be implemented with various corrections and in various modifications, without departing from the spirit and scope of the present invention. That is to say, the descriptions herein are provided only for the purpose of illustrating examples, and should by no means be construed to limit the present invention in any way.

The disclosure of Japanese Patent Application No. 2013-017348, filed on January 31, 2013, including the specification, drawings and abstract, is incorporated herein by reference in its entirety.

Further embodiments are defined as E1 to E9, as follows:
E1. A user terminal comprising:
   a first decoding section that decodes a downlink signal for another user terminal, from downlink signals for a plurality of user terminals that are non-orthogonal-multiplexed over a given radio resource;
   a first judgement section that judges whether or not the downlink signal for the other user terminal has been successfully received, based on a decoding result in the first decoding section;
   an interference cancellation section that cancels the decoded downlink signal for the other user terminal from the downlink signals for the plurality of user terminals;
   a second decoding section that decodes a downlink signal for the user terminal, from the downlink signals for the plurality of user terminals, from which the downlink signal for the other user terminal has been canceled in the interference cancellation section; and
   a second judgement section that judges whether or not the downlink signal for the user terminal has been successfully received, based on a decoding result in the second decoding section.
E2. The user terminal according to embodiment 1, wherein results of the judgements in the first judgement section and the second judgement section are reported to a connecting radio base station.
E3. The user terminal according to embodiment 2, wherein, when a
   judgement result in the first judgement section is failed reception, signals that show the results of the judgements in the first judgement section and the second judgement section are not transmitted.
E4. A radio base station comprising:
   a multiplexing section that non-orthogonal-multiplexes downlink signals for a plurality of user terminals over a given radio resource; and
   a scheduling section that executes retransmission control of downlink signals, based on a judgement result as to whether or not, in the user terminal having received the downlink signals for the plurality of user terminal, a downlink signal for another user terminal has been successfully received and a judgement result as to whether or not a downlink signal for the user terminal has been successfully received in the user terminal,wherein these judgement results are reported from the user terminal.
E5. The radio base station according to embodiment 4, wherein the scheduling section multiplexes retransmitted downlink signals for the plurality of user terminals to be orthogonal to each other.
E6. The radio base station according to embodiment 4, wherein, upon retransmission, the scheduling section changes a transmission power ratio of the downlink signals for the plurality of user terminals that are non-orthogonal-multiplexed.
E7. The radio base station according to embodiment 4, wherein, upon retransmission, the scheduling section changes relationships between the downlink signals for the plurality of user terminals that are non-orthogonal-multiplexed.
E8. The radio base station according to embodiment 4, wherein upon retransmission, the scheduling section changes a combination of the downlink signals for the plurality of user terminals that are non-orthogonal-multiplexed.
E9. A radio communication method, wherein:
   a radio base station non-orthogonal-multiplexes downlink signals for a plurality of user terminals over a given radio resource;
   a user terminal having received the downlink signals for the plurality of user terminals decodes a downlink signal for another user terminal, judges whether or not the downlink signal for the other user terminal has been successfully received based on a decoding result of the downlink signal for the other user terminal, cancels the decoded downlink signal for the other user terminal from the downlink signals for the plurality of user terminals, decodes a downlink signal for the user terminal, from the downlink signals for the plurality of user terminals, from which the downlink signal for the other user terminal has been canceled, judges whether the downlink signal for the user terminal has been successfully received based on a decoding result of the downlink signal for the user terminal, and reports a judgement result as to whether or not the downlink
      signal for the other user terminal has been successfully received and a judgement result as to whether or not the downlink signal for the user terminal has been successfully received, to the radio base station; and
   the radio base station executes retransmission control of downlink signals based on reports from the user terminal.

## Claims

1. A terminal comprising:
a first decoding section configured to decode a downlink signal for another terminal from downlink signals for a plurality of terminals that are non-orthogonal multiplexed over a given radio resource;
a first judgement section configured to judge whether or not the downlink signal for the other terminal has been successfully received, based on a decoding result in the first decoding section;
an interference cancellation section configured to cancel the decoded downlink signal for the other terminal from the downlink signals for the plurality of terminals;
a second decoding section configured to decode a downlink signal for the terminal, from the downlink signals for the plurality of terminals, from which the downlink signal for the other terminal has been canceled in the interference cancellation section; and
a second judgement section configured to judge whether or not the downlink signal for the terminal has been successfully received, based on a decoding result in the second decoding section,
wherein results of the judgements in the first judgement section and the second judgement section are reported to a radio base station.

2. The terminal according to claim 1, wherein a judgement result in the first judgement section and a judgement result in the second judgement section are used by the radio base station to perform a retransmission control of downlink signal

3. The terminal according to claim 1 or 2, wherein, when a judgement result in the first judgement section is failed reception, signals that show the results of the judgements in the first judgement section and the second judgement section are not transmitted.

4. A radio base station comprising:
a multiplexing section configured to non-orthogonal-multiplexe downlink signals for a plurality of terminals over a given radio resource; and
a scheduling section configured to execute retransmission control of downlink signals, based on
a judgement result as to whether or not, in the terminal having received the downlink signals for the plurality of terminal, a downlink signal for another terminal has been successfully received and
a judgement result as to whether or not a downlink signal for the terminal has been successfully received in the terminal,
wherein these judgement results are reported from the terminal.

5. The radio base station according to claim 4, wherein the scheduling section multiplexes retransmitted downlink signals for the plurality of terminals to be orthogonal to each other.

6. The radio base station according to claim 4, wherein, upon retransmission, the scheduling section changes a transmission power ratio of the downlink signals for the plurality of terminals that are non-orthogonal-multiplexed.

7. The radio base station according to claim 4, wherein, upon retransmission, the scheduling section changes relationships between the downlink signals for the plurality of terminals that are non-orthogonal-multiplexed.

8. The radio base station according to claim 4, wherein upon retransmission, the scheduling section changes a combination of the downlink signals for the plurality of terminals that are non-orthogonal-multiplexed.

9. A radio communication method comprising:
by a radio base station, non-orthogonal-multiplexing downlink signals for a plurality of terminals over a given radio resource;
by a terminal having received the downlink signals for the plurality of terminals:
decoding a downlink signal for another terminal,
judging whether or not the downlink signal for the other terminal has been successfully received based on a decoding result of the downlink signal for the other terminal,
canceling the decoded downlink signal for the other terminal from the downlink signals for the plurality of terminals,
decoding a downlink signal for the terminal, from the downlink signals for the plurality of terminals, from which the downlink signal for the other terminal has been canceled,
judging whether the downlink signal for the terminal has been successfully received based on a decoding result of the downlink signal for the terminal, and
reporting a judgement result as to whether or not the downlink signal for the other terminal has been successfully received and a judgement result as to whether or not the downlink signal for the terminal has been successfully received, to the radio base station; and
by the radio base station, executing retransmission control of downlink signals based on reports from the terminal
